# EUROPÄISCHE PATENTSCHRIFT

(11) **EP 3 003 801 B1**
(45) Veröffentlichungstag und Bekanntmachung des Hinweises auf die Patenterteilung: **19.05.2021**
(21) Anmeldenummer: 14720069.5
(22) Anmeldetag: 15.04.2014
(51) Int. Cl.: B60T 7/18, F16D 67/02, B60T 10/02, F16D 57/04

(54) **VERFAHREN ZUM STEUERN EINES ÜBER EINE TRENNKUPPLUNG ABKOPPELBAREN HYDRODYNAMISCHEN RETARDERS**
METHOD FOR CONTROLLING A HYDRODYNAMIC RETARDER THAT CAN BE DISENGAGED BY A DISCONNECT CLUTCH
PROCÉDÉ DE COMMANDE D'UN RALENTISSEUR HYDRODYNAMIQUE POUVANT ÊTRE DÉSACCOUPLÉ PAR UN EMBRAYAGE DE COUPURE

(30) Priorität: 07.06.2013 DE 102013009535
(43) Veröffentlichungstag der Anmeldung: 13.04.2016
(73) Patentinhaber: Voith Patent GmbH, 89522 Heidenheim (DE)
(72) Erfinder: ADAMS, Werner, 74564 Crailsheim (DE); LAUKEMANN, Dieter, 74564 Crailsheim (DE); MENNE, Achim, 74564 Crailsheim (DE); SCHADE, Ravi, 74564 Crailsheim (DE)
(74) Vertreter: Dr. Weitzel & Partner
(86) Internationale Anmeldenummer: PCT/EP2014/057583
(87) Internationale Veröffentlichungsnummer: WO 2014/195051

(56) Entgegenhaltungen:
- DE-A1-102004 017 115
- DE-A1-102004 059 835
- DE-A1-102009 001 146
- DE-A1-102009 046 341

## Beschreibung

Die vorliegende Erfindung betrifft ein Verfahren zum Steuern eines über eine Trennkupplung abkoppelbaren hydrodynamischen Retarders in einem Kraftfahrzeug mit einem Antriebsmotor, im Einzelnen gemäß dem Oberbegriff der unabhängigen Ansprüche.

Es ist bekannt, Kraftfahrzeuge mit einem hydrodynamischen Retarder, auch hydrodynamische Bremse genannt, auszurüsten, um das Kraftfahrzeug in der Regel neben einer Bremsung mit der sogenannten verschleißbehafteten Betriebsbremse (Reibbremse) verschleißfrei abbremsen zu können. Ein solcher hydrodynamischer Retarder ist in verschiedenen Bauformen bekannt. Allen ist gemein, dass wenigstens zwei beschaufelte Räder oder Kränze gemeinsam wenigstens einen mit einem Arbeitsmedium befüllbaren und von diesem entleerbaren Arbeitsraum ausbilden, um über eine hydrodynamische Kreislaufströmung des Arbeitsmediums im Arbeitsraum Drehmoment vom ersten Schaufelrad auf das zweite Schaufelrad zu übertragen und dadurch das erste Schaufelrad abzubremsen. Eine erste Ausführungsform, wie sie die vorliegende Erfindung betrifft, weist dabei einen sogenannten Rotor und einen sogenannten Stator auf, wobei das den Rotor ausbildende beschaufelte Rad gegenüber einem Stator umläuft, der durch ein stationäres Schaufelrad oder einen stationären Schaufelkranz gebildet wird. Eine zweite gattungsgemäße Ausführungsform sieht vor, dass ein umlaufender Rotor und ein in Gegenrichtung hierzu umlaufender Gegenlaufrotor gemeinsam den Arbeitsraum ausbilden, um mittels des Arbeitsmediums Antriebsleistung vom Rotor auf den Gegenlaufrotor zu übertragen.

Es ist nun bekannt, dass hydrodynamische Retarder auch im sogenannten Nichtbremsbetrieb, das heißt, wenn mit ihnen keine Bremsleistung erzeugt werden soll, immer noch eine gewisse Bremswirkung auf die sie antreibende Welle oder das sonstige Bauteil ausüben, da im Arbeitsraum eine Kreislaufströmung von Luft ausgebildet wird, die ein entsprechendes geringes Restbremsmoment zwischen den Schaufelrädern überträgt. Ein solches Restbremsmoment führt zu einem erhöhten Kraftstoffverbrauch des Antriebsmotors des Kraftfahrzeugs, da dieser gegen das Restbremsmoment arbeitet.

Aus der DE 10 2009 001 146 A1 ist beispielsweise ein Antriebsstrang mit einem Retarder bekannt.

Es ist daher bereits vorgeschlagen worden, eine Trennkupplung vorzusehen, mittels welcher der hydrodynamische Retarder abkoppelbar ist, um dadurch jeglichem Aufbau einer Kreislaufströmung im Arbeitsraum die physikalische Grundlage zu entziehen. Bei der erstgenannten gattungsgemäßen Ausführungsform des hydrodynamischen Retarders, wie sie auch gemäß der vorliegenden Erfindung vorgesehen sein kann, ist die Trennkupplung in der Triebverbindung zum Rotor vorgesehen, um diesen wahlweise im Bremsbetrieb anzutreiben oder im Nichtbremsbetrieb den Antrieb zu unterbrechen, das heißt beim Übergang vom Bremsbetrieb zum Nichtbremsbetrieb die Trennkupplung zu öffnen und beim Übergang vom Nichtbremsbetrieb zum Bremsbetrieb die Trennkupplung zu schließen. Zugleich ist es natürlich erforderlich, beim Übergang vom Nichtbremsbetrieb zum Bremsbetrieb den Arbeitsraum mit Arbeitsmedium zu befüllen und, um eine Überlastung der Trennkupplung beim Synchronisieren zu vermeiden, beim Übergang vom Bremsbetrieb zum Nichtbremsbetrieb den Arbeitsraum vom Arbeitsmedium zu entleeren. Alternativ kann die Trennkupplung auch zwischen dem Stator und einer stationären Abstützung vorgesehen sein, um durch Schließen der Trennkupplung beim Übergang vom Nichtbremsbetrieb zum Bremsbetrieb den Stator festzuhalten, sodass in den Arbeitsraum eingeleitetes Arbeitsmedium entsprechend eine Kreislaufströmung zwischen dem Rotor und dem Stator ausbildet, und durch Öffnen der Trennkupplung beim Übergang vom Bremsbetrieb zum Nichtbremsbetrieb die stationäre Abstützung des Stators zu beenden, sodass der Stator frei mit dem Rotor umläuft und sich dadurch keine Kreislaufströmung im dann vom Arbeitsmedium entleerten Arbeitsraum ausbilden kann. Schließlich kann auch ein hydrodynamischer Retarder mit einem sogenannten Gegenlaufrotor eine Trennkupplung in der Triebverbindung zum Gegenlaufrotor aufweisen, sodass dieser bei geschlossener Trennkupplung im Bremsbetrieb gegenläufig zum Rotor angetrieben wird und bei geöffneter Trennkupplung im Nichtbremsbetrieb wiederum frei mit dem Rotor umläuft, sodass mangels Drehzahldifferenz zwischen Rotor und Gegenlaufrotor sich ebenfalls keine Kreislaufströmung im Arbeitsraum ausbilden kann.

Die vorliegende Erfindung betrifft alle der vorgenannten Ausführungsformen von hydrodynamischen Retardern.

Neben baulichen und mit zusätzlichen Herstellungs- und Wartungskosten verbundenen Nachteilen bedeutet die Integration einer Trennkupplung, die beim Übergang vom Nichtbremsbetrieb zum Bremsbetrieb geschlossen und beim Übergang vom Bremsbetrieb zum Nichtbremsbetrieb geöffnet wird, dass der Aufbau eines Bremsmomentes mit dem hydrodynamischen Retarder nach einem entsprechenden Einschaltbefehl (Initiierung) durch den Fahrzeugführer, beispielsweise durch Betätigen eines entsprechenden Bremsaktuators, oder durch ein Fahrerassistenzsystem erst dann erfolgen kann, wenn sowohl die Trennkupplung geschlossen wurde als auch eine der Höhe des angeforderten Bremsmomentes entsprechende Arbeitsmediummenge in den Arbeitsraum eingebracht wurde, wobei eine entsprechende Luftmenge aus dem Arbeitsraum verdrängt werden muss, was das Einbringen verzögert. Um zu vermeiden, dass die Trennkupplung beim Synchronisieren bereits gegen ein vom Retarder aufgebrachtes Bremsmoment arbeitet, erfolgt das Schließen der Trennkupplung und das Einbringen des Arbeitsmediums in den Arbeitsraum mit oder ohne überlappende Zeitspannen hintereinander, wobei mit dem Schließen der Trennkupplung zuerst begonnen wird. Die notwendige Zeitspanne, bis das gewünschte Bremsmoment zur Verfügung steht, addiert sich demnach aus den beiden hintereinander vorgesehenen Zeitspannen zum Schließen der Trennkupplung und zum Einbringen des Arbeitsmediums in den Arbeitsraum.

Um das vom Fahrzeugführer oder einem Fahrerassistenzsystem angeforderte Bremsmoment nach der Initiierung eines Bremsvorganges schneller zur Verfügung stellen zu können, wurde in der DE 10 2007 024 698 A1 bereits vorgeschlagen, bereits dann, wenn sich der Antriebsmotor eines Kraftfahrzeugs in einem sogenannten Schubbetrieb oder im Leerlauf befindet, vorsorglich die Trennkupplung zu schließen, auch wenn noch keine Initiierung eines Bremsvorganges durch den Fahrzeugführer oder ein Fahrerassistenzsystem erfolgt ist. Wenn dann nachfolgend der Fahrzeugführer oder das Fahrerassistenzsystem eine Bremsung mit dem hydrodynamischen Retarder, das heißt den Übergang vom Nichtbremsbetrieb zum Bremsbetrieb anfordert, so braucht nur noch der Arbeitsraum des hydrodynamischen Retarders mit Arbeitsmedium befüllt werden, die Verzögerung zwischen der Initiierung des Bremsbetriebs und dem tatsächlich durch den hydrodynamischen Retarder zur Verfügung gestellten Bremsmoment durch einen Schließvorgang der Trennkupplung entfällt.

In der Praxis hat sich nun herausgestellt, dass die vorgeschlagene Lösung zu einer befriedigenden Ansprechzeit des hydrodynamischen Retarders führt, allerdings die Lebensdauer der Trennkupplung reduziert ist.

Der vorliegenden Erfindung liegt daher die Aufgabe zugrunde, das eingangs dargestellte Verfahren derart zu verbessern, dass im Wesentlichen ohne Verzögerung beim zur Verfügung Stellen des Bremsmomentes mit dem hydrodynamischen Retarder nach der Initiierung des Bremsbetriebs die Lebensdauer der Kupplung verlängert werden kann.

Die erfindungsgemäße Aufgabe wird durch ein Verfahren gemäß der unabhängigen Ansprüche gelöst. In den abhängigen Ansprüchen sind vorteilhafte und besonders zweckmäßige Ausgestaltungen der Erfindung angegeben.

Durch das erfindungsgemäße Verfahren kann die Anzahl der Schließvorgänge der Trennkupplung ganz erheblich reduziert werden, was deren Lebensdauer deutlich verlängert. So wird nämlich nicht mehr in jedem Schubbetrieb des Antriebsmotors die Trennkupplung geschlossen, sondern nur unter ganz bestimmten Voraussetzungen. Die Voraussetzungen sind dabei derart gewählt, dass eine Initiierung des Bremsbetriebs durch den Fahrzeugführer oder ein Fahrerassistenzsystem im Schubbetrieb in aller Regel nur dann erfolgt, wenn bereits die Trennkupplung geschlossen wurde. Es tritt somit keine nennenswerte Anzahl von Verzögerungen beim Aufbau des Bremsmomentes im Vergleich zum bekannten Verfahren auf.

Bei allen Alternativen des erfindungsgemäßen Verfahren zum Steuern eines über eine Trennkupplung abkoppelbaren hydrodynamischen Retarders in einem Kraftfahrzeug ist der Antriebsmotor des Kraftfahrzeugs, der der Beschleunigung des Kraftfahrzeugs durch den Antrieb von Antriebsrädern des Kraftfahrzeugs über einen sogenannten Antriebsstrang dient, in seiner Leistungsabgabe steuerbar. Die Leistungsabgabe wird entsprechend der Betätigung eines Aktuators durch den Fahrzeugführer oder ein Fahrerassistenzsystem gesteuert oder geregelt. In einem ersten Betriebszustand des Antriebsmotors, dem sogenannten Traktionsbetrieb, wird Antriebsleistung des Antriebsmotors über den Antriebsstrang des Kraftfahrzeugs zur Beschleunigung des Kraftfahrzeugs auf die Antriebsräder übertragen und in einem zweiten Betriebszustand, dem sogenannten Schubbetrieb, wird Antriebsleistung von den Antriebsrädern in den Antriebsstrang übertragen und insbesondere bis zum Antriebsmotor. Im zweiten Betriebszustand bremst somit der Antriebsstrang und insbesondere der Antriebsmotor, wenn er nicht abgekoppelt ist, das Kraftfahrzeug.

Der hydrodynamische Retarder weist, wie eingangs dargestellt, entweder einen angetriebenen beschaufelten Rotor und einen beschaufelten Stator oder einen angetriebenen beschaufeiten Rotor und einen in Gegenrichtung hierzu angetriebenen beschaufeiten Gegenlaufrotor auf, die miteinander einen mit Arbeitsmedium befüllbaren und von diesem entleerbaren Arbeitsraum ausbilden. Ferner ist eine Trennkupplung vorgesehen, mittels welcher der hydrodynamische Retarder wahlweise vom Antriebsstrang abkoppelbar und mit diesem verbindbar ist, um im Bremsbetrieb ein hydrodynamisches Bremsmoment des hydrodynamischen Retarders in den Antriebsstrang des Kraftfahrzeugs einzuleiten und im Nichtbremsbetrieb die Einleitung eines Bremsmomentes zu vermeiden. Dabei kann, wie eingangs dargestellt, die Trennkupplung in der Triebverbindung zum Rotor und/oder zum Gegenlaufrotor vorgesehen sein, um diesen entsprechend im geschlossenen Zustand der Trennkupplung anzutreiben und die Antriebsleistungsübertragung im geöffneten Zustand der Trennkupplung zu unterbinden. Alternativ ist es möglich, die Trennkupplung zwischen dem Stator und einer stationären Abstützung vorzusehen, sodass im Bremsbetrieb der Stator bei geschlossener Trennkupplung drehfest an der stationären Abstützung angebunden ist und im Nichtbremsbetrieb der Stator frei mit dem Rotor umlaufen kann. Auch bei einem mit einer Trennkupplung versehenen Gegenlaufrotor kann dieser im Nichtbremsbetrieb bei einer Ausführungsform der Erfindung frei mit dem Rotor umlaufen, wohingegen er im Bremsbetrieb bei geschlossener Trennkupplung gegenläufig zum Rotor angetrieben wird. Bei dieser Ausführungsform wird der Rotor stets angetrieben, im Unterschied zu einer alternativen erfindungsgemäßen Ausführungsform, bei welcher Rotor und Gegenlaufrotor gemeinsam mit einer Trennkupplung abkoppelbar sind.

Gemäß einer ersten Variante des erfindungsgemäßen Verfahrens wird nun im Schubbetrieb die Beschleunigung des Kraftfahrzeugs erfasst oder ermittelt und mit einem vorgegebenen Beschleunigungsgrenzwert verglichen. Der Beschleunigungsgrenzwert kann ein konstanter Wert sein oder in Abhängigkeit von Randbedingungen variabel vorgegeben werden. Erfindungsgemäß wird dabei, das heißt ebenfalls im Schubbetrieb, im Nichtbremsbetrieb die Trennkupplung unabhängig von einer Initiierung des Bremsbetriebs durch den Fahrzeugführer oder das Fahrerassistenzsystem geschlossen und der Arbeitsraum vom Arbeitsmedium entleert gehalten, wenn die Beschleunigung oberhalb des Beschleunigungsgrenzwertes liegt Insbesondere wird anderenfalls auch im Schubbetrieb die Trennkupplung offen gehalten, solange keine Initiierung des Bremsbetriebs durch den Fahrzeugführer oder das Fahrerassistenzsystem erfolgt.

Gemäß einer alternativen Ausgestaltung des erfindungsgemäßen Verfahrens wird im Schubbetrieb die Topographie der Fahrstrecke, die das Kraftfahrzeug gerade zurücklegt, erfasst oder ermittelt und dabei, das heißt ebenfalls im Schubbetrieb, im Nichtbremsbetrieb die Trennkupplung unabhängig von einer Initiierung des Bremsbetriebs durch den Fahrzeugführer oder das Fahrerassistenzsystem in Abhängigkeit der Topographie geschlossen.

Beispielsweise kann aus der Topographie ein Gefälle eines gerade vom Kraftfahrzeug befahrenen Streckenabschnitts und/oder eines diesem unmittelbar oder mittelbar folgenden Streckenabschnitts der Fahrstrecke ermittelt werden und das ermittelte Gefälle mit einem vorgegebenen Gefallegrenzwert verglichen werden, wobei im Nichtbremsbetrieb die Trennkupplung geschlossen wird - unabhängig von einer Initiierung des Bremsbetriebs durch den Fahrzeugführer oder das Fahrerassistenzsystem -, wenn das Gefälle größer als der Gefällegrenzwert ist. Bezüglich der Vorgabe eines Grenzwertes für das Gefälle gilt das zuvor zur Vorgabe des Beschleunigungsgrenzwertes Gesagte.
Bei einer erfindungsgemäßen Ausführungsform wird die im Schubbetrieb im Nichtbremsbetrieb geschlossene Trennkupplung mit Beginn des nächsten Traktionsbetriebs wieder geöffnet, da dann angenommen werden kann, dass die Initiierung des Bremsbetriebs durch den Fahrzeugführer oder das Fahrerassistenzsystem in der nachfolgenden Zeit unwahrscheinlich ist. Zusätzlich oder alternativ kann vorgesehen sein, dass die Trennkupplung bereits im selben Schubbetriebszustand, bei welchem im Nichtbremsbetrieb die Trennkupplung zuvor geschlossen wurde, wieder geöffnet wird, sobald eine vorgegebene Randbedingung eintritt. Beispielsweise kann die Randbedingung sein, dass die erfasste oder ermittelte Beschleunigung des Kraftfahrzeugs wieder unterhalb des Beschleunigungsgrenzwertes, insbesondere um einen vorgegebenen Betrag unterhalb des Beschleunigungsgrenzwertes liegt, letzteres um eine Hysterese auszubilden. Bei Berücksichtigung der Topographie beim Schließen der Trennkupplung kann im selben Schubbetrieb auch die Topographie wieder als auslösendes Ereignis für das Öffnen der Trennkupplung vorgesehen sein, das heißt die Trennkupplung in Abhängigkeit der Topographie wieder geöffnet werden. Wenn aus der Topographie ein Gefälle ermittelt wird, kann die geschlossene Trennkupplung beispielsweise wieder im selben Schubbetrieb, wie die Schließung erfolgte, geöffnet werden, sobald das Gefälle unterhalb des Gefällegrenzwertes, insbesondere mit einem vorgegebenen Betrag unterhalb des Gefällegrenzwertes liegt.

Das erfindungsgemäße vorsorgliche Schließen der Trennkupplung im Schubbetrieb im Nichtbremsbetrieb kann zusätzlich in Abhängigkeit weiterer Eingangsgrößen erfolgen, beispielsweise des Beladungszustandes beziehungsweise Gesamtgewichtes des Kraftfahrzeuges, letzteres insbesondere bei der Berücksichtigung des Gefälles. Beispielsweise kann bei einem vergleichsweise schwerer beladenen Kraftfahrzeug ein Schließen der Trennkupplung bereits bei einem kleineren Grenzwert erfolgen als bei einem vergleichsweise leichteren Kraftfahrzeug. Ein weiteres Beispiel für eine Eingangsgröße ist die Fahrzeuggeschwindigkeit. Beispielsweise kann der Grenzwert in Abhängigkeit der aktuellen Fahrzeuggeschwindigkeit variabel vorgegeben werden, insbesondere bei einer höheren Geschwindigkeit kleiner gewählt werden.

Die Erfindung soll nachfolgend anhand eines Ausführungsbeispiels exemplarisch beschrieben werden.

Es zeigen:
- Figur 1: einen Kraftfahrzeugantriebsstrang in einer ersten Ausführungsform, bei welcher das erfindungsgemäße Verfahren angewendet werden kann;
- Figur 2: einen Kraftfahrzeugantriebsstrang in einer zweiten Ausführungsform, bei weicher das erfindungsgemäße Verfahren angewendet werden kann.

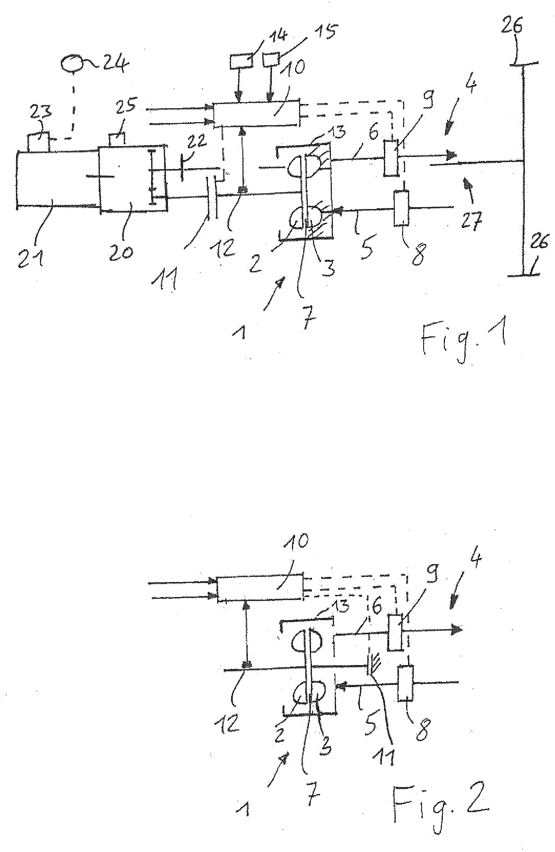

In der Figur 1 ist ein hydrodynamischer Retarder 1 mit einem Rotor 2 und einem Stator 3 dargestellt. Das Arbeitsmedium wird aus einem externen Arbeitsmediumkreislauf 4 dem Arbeitsraum 7 über eine Arbeitsmediumzufuhr 5 zugeführt und zum Kühlen des im Arbeitsraum 7 erwärmten Arbeitsmedium über eine Arbeitsmediumabfuhr 6 aus dem Retarder 1 abgeführt. In der Arbeitsmediumzufuhr 5 ist ein Einlassventil 8 angeordnet, und in der Arbeitsmediumabfuhr 6 ist ein Retarderauslassventil 9 vorgesehen. Die Retardersteuervorrichtung 10 greift sowohl auf das Retardereinlassventil 8 als auch auf das Retarderauslassventil 9 zu, zumindest mittelbar. Für den Übergang vom Nichtbremsbetrieb zum Bremsbetrieb wird das Retardereinlassventil 8 geöffnet. Das Retarderauslassventil 9 wird mit einem Stelldruck derart angesteuert, dass es die gewünschte Anstauung des Arbeitsmediums und damit den gewünschten Füllungsgrad des Arbeitsraumes 7 bewirkt Alternativ käme auch eine Füllungsgradsteuerung mittels einer verdrängenden Druckbeaufschlagung eines Arbeitsmediumvorrats in Betracht.

Beim Übergang vom Bremsbetrieb zum Nichtbremsbetrieb wird das Einlassventil 8 geschlossen, damit kein weiteres Arbeitsmedium in den Arbeitsraum 7 strömen kann. Zugleich wird das Auslassventil 9 noch solange offen gehalten, bis sich der Arbeitsraum 7 auf den gewünschten Zustand entleert hat. Hierzu ist es notwendig, den Rotor 2 fortgesetzt anzutreiben, um dessen Pumpwirkung auszunutzen. Somit wird auch die Trennkupplung 11 noch solange geschlossen gehalten bis sichergestellt ist, dass die Entleerung in ausreichendem Maße stattgefunden hat.

Da die Dauer der Entleerung von der Drehzahl des Rotors 2 zum Zeitpunkt der gewünschten Abschaltung, das heißt bei der Feststellung der Retarderausschaltanforderung abhängig ist, wird die Drehzahl des Rotors 2 erfasst, beispielsweise über den dargestellten Drehzahlsensor 12, und der Retardersteuervorrichtung 10 mitgeteilt. Der Drehzahlsensor 12 könnte auch an einer anderen Stelle positioniert sein, beispielsweise in Richtung des Antriebsleistungsflusses vor der Trennkupplung 11 oder die Drehzahl könnte der Retardersteuervorrichtung 10 anders zur Verfügung gestellt werden, beispielsweise über einen CAN-Bus, da die Drehzahl in der Regel von einer anderen Drehzahl im Antriebsstrang, in dem der hydrodynamische Retarder 1 vorgesehen ist, abhängig ist, beispielsweise der Getriebewellenabtriebsdrehzahl eines Kraftfahrzeuggetriebes oder von der Fahrzeuggeschwindigkeit, bei einem sogenannten Sekundärretarder oder der Motordrehzahl bei einem Primärretarder.

Die Retardersteuervorrichtung 10 steuert ferner, wie durch die gestrichelte Linie angedeutet ist, das Öffnen und Schließen der Trennkupplung 11. Ferner empfängt sie Eingangssignale, beispielsweise von einem Retarderbedienhebel und einem Fahrerassistenzsystem, um eine Retardereinschaltanforderung oder eine Retarderausschaltanforderung feststellen zu können.

Der Retarder 1 ist im gezeigten Ausführungsbeispiel sekundärseitig auf einem Nebenabtriebsstrang eines Getriebes 20 des Kraftfahrzeugs angeordnet, wobei in der gezeigten Darstellung die Trennkupplung 11 und der Retarder 1 außerhalb des Getriebes 20 beziehungsweise außen am Getriebe 20 vorgesehen sind. Alternativ könnten auch die Trennkupplung 11 und/oder der Retarder 1 in dem Getriebe 20 integriert sein.

Das Getriebe 20 überträgt Antriebsleistung des Antriebsmotors 21 über einen Getriebeabtriebsflansch 22 auf Antriebsräder 26 des Kraftfahrzeugs. Der Antriebsmotor 21 weist ein Motorsteuergerät 23 auf, das die Leistungsabgabe des Antriebsmotors entsprechend der Betätigung eines Aktuators 24, beispielweise eines nicht im Einzelnen dargestellten Fußpedals oder Hebels steuert. Auch das Getriebe 20 weist ein Getriebesteuergerät 25 auf, das Schaltvorgänge in dem Getriebe 20 steuert, entweder automatisch oder entsprechend der Betätigung eines Aktuators durch den Fahrzeugführer.

Die Retardersteuervorrichtung 10 kann als weiteres Eingangssignal die Fahrzeuggeschwindigkeit empfangen, die beispielsweise über einen schematisch dargestellten CAN-Bus 14 zur Verfügung gestellt wird. Ferner ist es möglich, dass Signale eines Navigationssystems, insbesondere GPS-Systems 15 der Retardersteuervorrichtung 10 zugeführt werden, damit diese die Topographie oder Neigung der Fahrstrecke, die das Kraftfahrzeug gerade befährt, verarbeiten kann.

Erfindungsgemäß wird nun unter der Voraussetzung, dass der Antriebsmotor 21 im sogenannten Schubbetrieb betrieben wird, das heißt das Antriebsleistung von den Antriebsrädern 26 in den Antriebsstrang 27 geleitet wird, über weichen die Antriebsräder 26 mit dem Antriebsmotor 21 verbunden sind (unter Zwischenschaltung des Getriebes 20), die Trennkupplung 11 vorsorglich dann geschlossen, wenn die aus der Fahrzeuggeschwindigkeit berechnete oder direkt erfasste Fahrzeugbeschleunigung oberhalb eines vorgegebenen Beschleunigungsgrenzwertes liegt. Zusätzlich oder alternativ kann auch die Topographie oder Neigung der Fahrstrecke zur Entscheidung herangezogen werden, ob die Trennkupplung 11 vorsorglich geschlossen wird.

Die Ausführungsform gemäß der Figur 2 entspricht weitgehend jener der Figur 1. Details des Antriebsstrangs des Kraftfahrzeugs wurden hier ausgelassen. Abweichend von der Ausgestaltung gemäß der Figur 1 ist die Trennkupplung 11 in der Triebverbindung zum Stator 3 vorgesehen, sodass der Stator 3 im Nichtbremsbetrieb des hydrodynamischen Retarders 1 mit dem Rotor 2 umläuft, ohne dass ein Bremsmoment erzeugt wird, und beim Übergang vom Nichtbremsbetrieb zum Bremsbetrieb mit der Trennkupplung 11 zum Stillstand abgebremst wird. Alternativ könnte anstelle des Stators 3 auch ein Gegenlaufrotor vorgesehen sein, der beim Übergang vom Nichtbremsbetrieb zum Bremsbetrieb mittels der Trennkupplung 11 beschleunigt wird und entgegen der Drehrichtung des Rotors 2 angetrieben wird.

## Patentansprüche

1. Verfahren zum Steuern eines über eine Trennkupplung (11) abkoppelbaren hydrodynamischer Retarders (1) in einem Kraftfahrzeug,
1.1 das einen über einen Aktuator (24) wie Fußpedal oder Hebel in seiner Leistungsabgabe steuerbaren Antriebsmotor (21) aufweist,
1.2 der in Abhängigkeit der Betätigung des Aktuators (24) in einem ersten Betriebszustand, einem sogenannten Traktionsbetrieb betrieben wird, in welchem Antriebsleistung des Antriebsmotors (21) über einen Antriebsstrang (27) des Kraftfahrzeugs zur Beschleunigung des Kraftfahrzeugs auf Antriebsräder (26) übertragen wird, und in einem zweiten Betriebszustand, dem sogenannten Schubbetrieb betrieben wird, in welchem Antriebsleistung von den Antriebsrädern (26) in den Antriebsstrang (27) übertragen wird; wobei
1.3 der hydrodynamische Retarder (1) einen angetriebenen beschaufelten Rotor (2) und einen beschaufelten Stator (3) oder einen angetriebenen beschaufelten Rotor (2) und einen in Gegenrichtung hierzu angetriebenen beschaufelten Gegenlaufrotor aufweist, die miteinander einen mit einem Arbeitsmedium befüllbaren und von diesem entleerbaren Arbeitsraum (7) ausbilden,
1.4 der Rotor (2) mittels einer Trennkupplung (11) wahlweise vom Antriebsstrang (27) abkoppelbar und mit diesem drehfest verbindbar ist oder
der Stator (3) mit der Trennkupplung (11) wahlweise gegenüber einer stationären Abstützung abkoppelbar und mit dieser drehfest verbindbar ist oder der Gegenlaufrotor mit der Trennkupplung (11) wahlweise vom Antriebsstrang (27) abkoppelbar und mit diesem verbindbar ist,
sodass
1.5 in einem von einem Fahrzeugführer oder Fahrerassistenzsystem initiierten Bremsbetrieb der Rotor (2) bei geschlossener Trennkupplung (11) gegenüber dem stationären Stator (3) oder entgegengesetzt zu dem Gegenlaufrotor angetrieben wird und bei befülltem Arbeitsraum (7) Drehmoment vom Rotor (2) auf den Stator (3) oder den Gegenlaufrotor übertragen wird, und
1.6 in einem vom Fahrzeugführer oder dem Fahrerassistenzsystem initiierten Nichtbremsbetrieb mit geöffneter Trennkupplung (11) die Antriebsleistungsübertragung zu dem Rotor (2) oder dem Gegenlaufrotor oder die Kopplung des Stators (3) gegenüber der stationären Abstützung unterbrochen ist und der Arbeitsraum (7) vom Arbeitsmedium entleert ist; wobei
1.7 beim Übergang vom Nichtbremsbetrieb zum Bremsbetrieb die Trennkupplung (11) geschlossen und der Arbeitsraum (7) mit Arbeitsmedium befüllt wird und beim Übergang vom Bremsbetrieb zum Nichtbremsbetrieb der Arbeitsraum (7) vom Arbeitsmedium entleert und die Trennkupplung (11) zeitgleich oder verzögert geöffnet wird;
**dadurch gekennzeichnet, dass**
1.8 im Schubbetrieb eine Beschleunigung des Kraftfahrzeugs erfasst oder ermittelt wird und mit einem vorgegebenen Beschleunigungsgrenzwert verglichen wird, und dabei
1.9 im Nichtbremsbetrieb die Trennkupplung (11) unabhängig von einer Initiierung des Bremsbetriebs durch den Fahrzeugführer oder das Fahrerassistenzsystem geschlossen und der Arbeitsraum (7) entleert gehalten wird, wenn die Beschleunigung oberhalb des Beschleunigungsgrenzwertes liegt.

2. Verfahren zum Steuern eines über eine Trennkupplung (11) abkoppelbaren hydrodynamischer Retarders (1) in einem Kraftfahrzeug,
2.1 das einen über einen Aktuator (24) wie Fußpedal oder Hebel in seiner Leistungsabgabe steuerbaren Antriebsmotor (21) aufweist,
2.2 der in Abhängigkeit der Betätigung des Aktuators (24) in einem ersten Betriebszustand, einem sogenannten Traktionsbetrieb betrieben wird, in welchem Antriebsleistung des Antriebsmotors (21) über einen Antriebsstrang (27) des Kraftfahrzeugs zur Beschleunigung des Kraftfahrzeugs auf Antriebsräder (26) übertragen wird, und in einem zweiten Betriebszustand, dem sogenannten Schubbetrieb betrieben wird, in welchem Antriebsleistung von den Antriebsrädern (26) in den Antriebsstrang (27) übertragen wird; wobei
2.3 der hydrodynamische Retarder (1) einen angetriebenen beschaufelten Rotor (2) und einen beschaufelten Stator (3) oder einen angetriebenen beschaufelten Rotor (2) und einen in Gegenrichtung hierzu angetriebenen beschaufelten Gegenlaufrotor aufweist, die miteinander einen mit einem Arbeitsmedium befüllbaren und von diesem entleerbaren Arbeitsraum (7) ausbilden,
2.4 der Rotor (2) mittels einer Trennkupplung (11) wahlweise vom Antriebsstrang (27) abkoppelbar und mit diesem drehfest verbindbar ist oder der Stator (3) mit der Trennkupplung (11) wahlweise gegenüber einer stationären Abstützung abkoppelbar und mit dieser drehfest verbindbar ist oder der Gegenlaufrotor mit der Trennkupplung (11) wahlweise vom Antriebsstrang (27) abkoppelbar und mit diesem verbindbar ist,
sodass
2.5 in einem von einem Fahrzeugführer oder Fahrerassistenzsystem initiierten Bremsbetrieb der Rotor (2) bei geschlossener Trennkupplung (11) gegenüber dem stationären Stator (3) oder entgegengesetzt zu dem Gegenlaufrotor angetrieben wird und bei befülltem Arbeitsraum (7) Drehmoment vom Rotor (2) auf den Stator (3) oder den Gegenlaufrotor übertragen wird, und
2.6 in einem vom Fahrzeugführer oder dem Fahrerassistenzsystem initiierten Nichtbremsbetrieb mit geöffneter Trennkupplung (11) die Antriebsleistungsübertragung zu dem Rotor (2) oder dem Gegenlaufrotor oder die Kopplung des Stators (3) gegenüber der stationären Abstützung unterbrochen ist und der Arbeitsraum (7) vom Arbeitsmedium entleert ist; wobei
2.7 beim Übergang vom Nichtbremsbetrieb zum Bremsbetrieb die Trennkupplung (11) geschlossen und der Arbeitsraum (7) mit Arbeitsmedium befüllt wird und beim Übergang vom Bremsbetrieb zum Nichtbremsbetrieb der Arbeitsraum (7) vom Arbeitsmedium entleert und die Trennkupplung (11) zeitgleich oder verzögert geöffnet wird;
**dadurch gekennzeichnet, dass**
2.8 im Schubbetrieb die Topographie der Fahrstrecke, die das Kraftfahrzeug gerade zurücklegt, erfasst oder ermittelt wird und dabei
2.9 im Nichtbremsbetrieb die Trennkupplung (11) unabhängig von einer Initiierung des Bremsbetriebs durch den Fahrzeugführer oder das Fahrerassistenzsystem in Abhängigkeit der Topographie geschlossen wird.

3. Verfahren gemäß einem der Ansprüche 1 oder 2, **dadurch gekennzeichnet, dass** die im Schubbetrieb im Nichtbremsbetrieb geschlossene Trennkupplung (11) erst mit Beginn des nächsten Traktionsbetriebs wieder geöffnet wird.

4. Verfahren gemäß Anspruch 1, **dadurch gekennzeichnet, dass** die im Schubbetrieb im Nichtbremsbetrieb geschlossene Trennkupplung (11) im Schubbetrieb wieder geöffnet wird, sobald die erfasste oder ermittelte Beschleunigung unterhalb des Beschleunigungsgrenzwertes, insbesondere um einen vorgegebenen Betrag unterhalb des Beschleunigungsgrenzwertes liegt.

5. Verfahren gemäß Anspruch 2, **dadurch gekennzeichnet, dass** die im Schubbetrieb im Nichtbremsbetrieb geschlossene Trennkupplung (11) im Schubbetrieb in Abhängigkeit der Topographie wieder geöffnet wird.

6. Verfahren gemäß einem der Ansprüche 4 oder 5, **dadurch gekennzeichnet, dass** die im Schubbetrieb im Nichtbremsbetrieb geschlossene Trennkupplung (11) auch mit Beginn des nächsten Traktionsbetriebs wieder geöffnet wird.

7. Verfahren gemäß Anspruch 2 und insbesondere einem der Ansprüche 5 oder 6, **dadurch gekennzeichnet, dass** aus der Topographie ein Gefälle eines gerade vom Kraftfahrzeug befahrenen Streckenabschnitts und/oder eines diesem unmittelbar oder mittelbar folgenden Streckenabschnitts der Fahrstrecke ermittelt wird und dieses Gefälle mit einem vorgegebenen Gefällegrenzwert verglichen wird, wobei im Nichtbremsbetrieb die Trennkupplung (11) geschlossen wird, wenn das Gefälle größer als der Gefällegrenzwert ist.

8. Verfahren gemäß Anspruch 7, **dadurch gekennzeichnet, dass** die im Schubbetrieb im Nichtbremsbetrieb geschlossene Trennkupplung (11) im Schubbetrieb wieder geöffnet wird, sobald das Gefälle unterhalb des Gefällegrenzwertes, insbesondere um einen vorgegebenen Betrag unterhalb des Gefällegrenzwertes liegt.

## Claims

1. Method for controlling a hydrodynamic retarder (1) which can be decoupled via a separating clutch (11) in a motor vehicle,
1.1 which motor vehicle has a drive engine (21), the power output of which can be controlled via an actuator (24) such as a foot pedal or a lever,
1.2 which drive engine (21) is operated in a manner which is dependent on the actuation of the actuator (24) in a first operating state, what is known as traction operation, in which drive power of the drive engine (21) is transmitted via a drive train (27) of the motor vehicle to drive wheels (26) in order to accelerate the motor vehicle, and in a second operating state, what is known as overrun operation, in which drive power is transmitted from the drive wheels (26) into the drive train (27);
1.3 the hydrodynamic retarder (1) having a driven bladed rotor (2) and a bladed stator (3) or a driven bladed rotor (2) and a bladed counter-rotating rotor which is driven in the opposite direction with respect to the former, which configure with one another a working space (7) which can be filled with and emptied of a working medium,
1.4 it being possible, by means of a separating clutch (11), for the rotor (2) to be selectively decoupled from the drive train (27) and connected to the said drive train (27) fixedly so as to rotate with it,
or
it being possible, by way of the separating clutch (11), for the stator (3) to be selectively decoupled with respect to a stationary support and connected to the said stationary support fixedly so as to rotate with it,
or it being possible, by way of the separating clutch (11), for the counter-rotating rotor to be selectively decoupled from the drive train (27) and connected to the said drive train (27),
with the result that,
1.5 in braking operation which is initiated by a vehicle driver or a driver assistance system, the rotor (2) is driven, in the case of a closed separating clutch (11), with respect to the stationary stator (3) or in an opposed manner with respect to the counter-rotating rotor, and torque is transmitted from the rotor (2) to the stator (3) or the counter-rotating rotor in the case of a filled working space (7), and,
1.6 in non-braking operation which is initiated by the vehicle driver or the driver assistance system, the transmission of drive power to the rotor (2) or the counter-rotating rotor or the coupling of the stator (3) with respect to the stationary support is interrupted in the case of an open separating clutch (11), and the working space (7) is emptied of the working medium;
1.7 in the case of the transition from non-braking operation to braking operation, the separating clutch (11) being closed and the working space (7) being filled with working medium and, in the case of the transition from braking operation to non-braking operation, the working space (7) being emptied of the working medium, and the separating clutch (11) being opened at the same time or with a delay;
**characterized in that**,
1.8 in overrun operation, an acceleration of the motor vehicle is detected or determined and compared with a predefined acceleration limit value, and,
1.9 in non-braking operation, the separating clutch (11) is closed here independently of an initiation of the braking operation by way of the vehicle driver or the driver assistance system and the working space (7) is kept emptied if the acceleration lies above the acceleration limit value.

2. Method for controlling a hydrodynamic retarder (1) which can be decoupled via a separating clutch (11) in a motor vehicle,
2.1 which motor vehicle has a drive engine (21), the power output of which can be controlled via an actuator (24) such as a foot pedal or a lever,
2.2 which drive engine (21) is operated in a manner which is dependent on the actuation of the actuator (24) in a first operating state, what is known as traction operation, in which drive power of the drive engine (21) is transmitted via a drive train (27) of the motor vehicle to drive wheels (26) in order to accelerate the motor vehicle, and in a second operating state, what is known as overrun operation, in which drive power is transmitted from the drive wheels (26) into the drive train (27);
2.3 the hydrodynamic retarder (1) having a driven bladed rotor (2) and a bladed stator (3) or a driven bladed rotor (2) and a bladed counter-rotating rotor which is driven in the opposite direction with respect to the former, which configure with one another a working space (7) which can be filled with and emptied of a working medium,
2.4 it being possible, by means of a separating clutch (11), for the rotor (2) to be selectively decoupled from the drive train (27) and connected to the said drive train (27) fixedly so as to rotate with it,
or
it being possible, by way of the separating clutch (11), for the stator (3) to be selectively decoupled with respect to a stationary support and connected to the said stationary support fixedly so as to rotate with it,
or it being possible, by way of the separating clutch (11), for the counter-rotating rotor to be selectively decoupled from the drive train (27) and connected to the said drive train (27),
with the result that,
2.5 in braking operation which is initiated by a vehicle driver or a driver assistance system, the rotor (2) is driven, in the case of a closed separating clutch (11), with respect to the stationary stator (3) or in an opposed manner with respect to the counter-rotating rotor, and torque is transmitted from the rotor (2) to the stator (3) or the counter-rotating rotor in the case of a filled working space (7), and,
2.6 in non-braking operation which is initiated by the vehicle driver or the driver assistance system, the transmission of drive power to the rotor (2) or the counter-rotating rotor or the coupling of the stator (3) with respect to the stationary support is interrupted in the case of an open separating clutch (11), and the working space (7) is emptied of the working medium;
2.7 in the case of the transition from non-braking operation to braking operation, the separating clutch (11) being closed and the working space (7) being filled with working medium and, in the case of the transition from braking operation to non-braking operation, the working space (7) being emptied of the working medium, and the separating clutch (11) being opened at the same time or with a delay;
**characterized in that**,
2.8 in overrun operation, the topography of the driving route which the motor vehicle is currently travelling along is detected or determined, and
2.9 in non-braking operation, the separating clutch (11) is closed here in a manner which is dependent on the topography, independently of an initiation of the braking operation by way of the vehicle driver or the driver assistance system.

3. Method according to either of Claims 1 and 2, **characterized in that** the separating clutch (11) which is closed in overrun operation in non-braking operation is opened again only at the beginning of the next traction operation.

4. Method according to Claim 1, **characterized in that** the separating clutch (11) which is closed in overrun operation in non-braking operation is opened again in overrun operation as soon as the detected or determined acceleration lies below the acceleration limit value, in particular lies below the acceleration limit value by a predefined value.

5. Method according to Claim 2, **characterized in that** the separating clutch (11) which is closed in overrun operation in non-braking operation is opened again in overrun operation in a manner which is dependent on the topography.

6. Method according to either of Claims 4 and 5, **characterized in that** the separating clutch (11) which is closed in overrun operation in non-braking operation is also opened again at the beginning of the next traction operation.

7. Method according to Claim 2 and, in particular, either of Claims 5 and 6, **characterized in that** a gradient of a route section which is currently being driven by the motor vehicle and/or of a route section of the driving route which follows the former directly or indirectly is determined from the topography, and the said gradient is compared with a predefined gradient limit value, the separating clutch (11) being closed in non-braking operation if the gradient is greater than the gradient limit value.

8. Method according to Claim 7, **characterized in that** the separating clutch (11) which is closed in overrun operation in non-braking operation is opened again in overrun operation as soon as the gradient lies below the gradient limit value, in particular lies below the gradient limit value by a predefined value.

## Revendications

1. Procédé de commande d'un ralentisseur hydrodynamique (1) pouvant être désaccouplé par un embrayage de coupure (11) dans un véhicule automobile
1.1 qui comprend un moteur d'entraînement (21) dont la puissance de sortie peut être commandée par le biais d'un actionneur (24) tel qu'une pédale ou un levier,
1.2 lequel moteur d'entraînement fonctionne, en fonction de l'actionnement de l'actionneur (24), dans un premier état de fonctionnement, dit fonctionnement en traction, dans lequel la puissance d'entraînement du moteur d'entraînement (21) est transmise à des roues motrices (26) par le biais d'une chaîne cinématique (27) du véhicule automobile pour l'accélération du véhicule automobile et, dans un deuxième état de fonctionnement, dit fonctionnement en décélération, dans lequel la puissance d'entraînement est transmise des roues motrices (26) à la chaîne cinématique (27) ;
1.3 le ralentisseur hydrodynamique (1) comprenant un rotor à aubes entraîné (2) et un stator à aubes (3) ou un rotor à aubes entraîné (2) et un rotor contrarotatif à aubes entraîné en sens inverse de celui-ci, lesquels forment conjointement un espace de travail (7) pouvant être rempli d'un fluide de travail et pouvant être vidé de celui-ci,
1.4 le rotor (2) pouvant, au moyen d'un embrayage de coupure (11), être sélectivement désaccouplé de la chaîne cinématique (27) et être relié de manière solidaire en rotation à celle-ci ou
le stator (3) pouvant, à l'aide de l'embrayage de coupure (11), être sélectivement désaccouplé par rapport à un support fixe et relié de manière bloquée en rotation à celui-ci ou le rotor contrarotatif pouvant, à l'aide de l'embrayage de coupure (11), être sélectivement désaccouplé de la chaîne cinématique (27) et être relié à celle-ci, de telle sorte que
1.5 dans un fonctionnement de freinage déclenché par un conducteur du véhicule ou un système d'aide à la conduite, le rotor (2) est entraîné par rapport au stator fixe (3) ou en sens opposé à celui du rotor contrarotatif en cas d'embrayage de coupure fermé (11) et, en cas d'espace de travail rempli (7), le couple est transmis du rotor (2) au stator (3) ou au rotor contrarotatif, et
1.6 dans un fonctionnement de non freinage déclenché par le conducteur du véhicule ou le système d'aide à la conduite avec l'embrayage de coupure ouvert (11), la transmission de puissance d'entraînement au rotor (2) ou au rotor contrarotatif ou l'accouplement du stator (3) par rapport au support fixe est interrompu(e) et l'espace de travail (7) est vidé du fluide de travail ;
1.7 lors de la transition du fonctionnement de non freinage au fonctionnement de freinage, l'embrayage de coupure (11) étant fermé et l'espace de travail (7) étant rempli de fluide de travail et lors de la transition du fonctionnement de freinage au fonctionnement de non freinage, l'espace de travail (7) étant vidé de fluide de travail et l'embrayage de coupure (11) étant ouvert de manière simultanée ou retardée ;
**caractérisé en ce que**
1.8 dans le fonctionnement en décélération, une accélération du véhicule automobile est détectée ou déterminée et est comparée à une valeur limite d'accélération prédéfinie, et en l'occurrence
1.9 dans le fonctionnement de non freinage, l'embrayage de coupure (11) est fermé indépendamment d'un déclenchement du fonctionnement de freinage par le conducteur du véhicule ou le système d'aide à la conduite et l'espace de travail (7) est maintenu vide lorsque l'accélération est supérieure à la valeur limite d'accélération.

2. Procédé de commande d'un ralentisseur hydrodynamique (1) pouvant être désaccouplé par un embrayage de coupure (11) dans un véhicule automobile
2.1 qui comprend un moteur d'entraînement (21) dont la puissance de sortie peut être commandée par le biais d'un actionneur (24) tel qu'une pédale ou un levier,
2.2 lequel moteur d'entraînement fonctionne, en fonction de l'actionnement de l'actionneur (24), dans un premier état de fonctionnement, dit fonctionnement en traction, dans lequel la puissance d'entraînement du moteur d'entraînement (21) est transmise à des roues motrices (26) par le biais d'une chaîne cinématique (27) du véhicule automobile pour l'accélération du véhicule automobile et, dans un deuxième état de fonctionnement, dit fonctionnement en décélération, dans lequel la puissance d'entraînement est transmise des roues motrices (26) à la chaîne cinématique (27) ;
2.3 le ralentisseur hydrodynamique (1) comprenant un rotor à aubes entraîné (2) et un stator à aubes (3) ou un rotor à aubes entraîné (2) et un rotor contrarotatif à aubes entraîné en sens inverse de celui-ci, lesquels forment conjointement un espace de travail (7) pouvant être rempli d'un fluide de travail et pouvant être vidé de celui-ci,
2.4 le rotor (2) pouvant, au moyen d'un embrayage de coupure (11), être sélectivement désaccouplé de la chaîne cinématique (27) et être relié de manière solidaire en rotation à celle-ci ou le stator (3) pouvant, à l'aide de l'embrayage de coupure (11), être sélectivement désaccouplé par rapport à un support fixe et relié de manière bloquée en rotation à celui-ci ou le rotor contrarotatif pouvant, à l'aide de l'embrayage de coupure (11), être sélectivement désaccouplé de la chaîne cinématique (27) et être relié à celle-ci, de telle sorte que
2.5 dans un fonctionnement de freinage déclenché par un conducteur du véhicule ou un système d'aide à la conduite, le rotor (2) est entraîné par rapport au stator fixe (3) ou en sens opposé à celui du rotor contrarotatif en cas d'embrayage de coupure fermé (11) et, en cas d'espace de travail rempli (7), le couple est transmis du rotor (2) au stator (3) ou au rotor contrarotatif, et
2.6 dans un fonctionnement de non freinage déclenché par le conducteur du véhicule ou le système d'aide à la conduite avec l'embrayage de coupure ouvert (11), la transmission de puissance d'entraînement au rotor (2) ou au rotor contrarotatif ou l'accouplement du stator (3) par rapport au support fixe est interrompu(e) et l'espace de travail (7) est vidé du fluide de travail ;
2.7 lors de la transition du fonctionnement de non freinage au fonctionnement de freinage, l'embrayage de coupure (11) étant fermé et l'espace de travail (7) étant rempli de fluide de travail et lors de la transition du fonctionnement de freinage au fonctionnement de non freinage, l'espace de travail (7) étant vidé de fluide de travail et l'embrayage de coupure (11) étant ouvert de manière simultanée ou retardée ;
**caractérisé en ce que**
2.8 dans le fonctionnement en décélération, la topographie du trajet que le véhicule automobile parcourt à cet instant est détectée ou déterminée et en l'occurrence
2.9 dans le fonctionnement de non freinage, l'embrayage de coupure (11) est fermé indépendamment d'un déclenchement du fonctionnement de freinage par le conducteur du véhicule ou le système d'aide à la conduite en fonction de la topographie.

3. Procédé selon l'une des revendications 1 et 2, **caractérisé en ce que** l'embrayage de coupure fermé (11) dans le fonctionnement en décélération dans le fonctionnement de non freinage n'est à nouveau ouvert qu'au début du fonctionnement en traction suivant.

4. Procédé selon la revendication 1, **caractérisé en ce que** l'embrayage de coupure fermé (11) dans le fonctionnement en décélération dans le fonctionnement de non freinage est à nouveau ouvert dans le fonctionnement en décélération dès que l'accélération détectée ou déterminée est inférieure à la valeur limite d'accélération, en particulier inférieure à la valeur limite d'accélération d'une grandeur prédéfinie.

5. Procédé selon la revendication 2, **caractérisé en ce que** l'embrayage de coupure fermé (11) dans le fonctionnement en décélération dans le fonctionnement de non freinage est à nouveau ouvert dans le fonctionnement en décélération en fonction de la topographie.

6. Procédé selon l'une des revendications 4 et 5, **caractérisé en ce que** l'embrayage de coupure fermé (11) dans le fonctionnement en décélération dans le fonctionnement de non freinage est à nouveau ouvert également au début du fonctionnement en traction suivant.

7. Procédé selon la revendication 2 et en particulier l'une des revendications 5 et 6, **caractérisé en ce qu'**à partir de la topographie, une déclivité d'un tronçon de trajet parcouru par le véhicule automobile à cet instant et/ou d'un tronçon du trajet suivant celui-ci directement ou indirectement est déterminée et cette déclivité est comparée à une valeur limite de déclivité prédéfinie, l'embrayage de coupure (11) étant fermé dans le fonctionnement de non freinage lorsque la déclivité est supérieure à la valeur limite de déclivité.

8. Procédé selon la revendication 7, **caractérisé en ce que** l'embrayage de coupure fermé (11) dans le fonctionnement en décélération dans le fonctionnement de non freinage est à nouveau ouvert dans le fonctionnement en décélération dès que la déclivité est inférieure à la valeur limite de déclivité, en particulier inférieure à la valeur limite de déclivité d'une grandeur prédéfinie.
